# FASCICULE DE BREVET EUROPEEN

(11) **EP 3 047 561 B1**
(45) Date de publication et mention de la délivrance du brevet: **21.04.2021**
(21) Numéro de dépôt: 14786983.8
(22) Date de dépôt: 26.08.2014
(51) Int. Cl.: H02K 11/00, H02K 3/52

(54) **MOTEUR ELECTRIQUE POLYPHASE EQUIPE D'UN DISPOSITIF DE DETERMINATION DE LA POSITION ANGULAIRE ET/OU DE LA VITESSE DE ROTATION D'UN ROTOR DUDIT MOTEUR**
MEHRPHASIGER ELEKTROMOTOR MIT EINER VORRICHTUNG ZUR BESTIMMUNG DER WINKELPOSITION UND/ODER DER DREHZAHL EINES ROTORS DIESES MOTORS
POLYPHASE ELECTRIC MOTOR PROVIDED WITH A DEVICE FOR DETERMINING THE ANGULAR POSITION AND/OR THE SPEED OF ROTATION OF A ROTOR OF SAID MOTOR

(30) Priorité: 20.09.2013 FR 1359069
(43) Date de publication de la demande: 27.07.2016
(73) Titulaire: Valeo Equipements Electriques Moteur, 94046 Créteil Cedex (FR)
(72) Inventeur: RAKOTOVAO, Mamy, F-94400 Vitry sur Seine (FR); EL BARAKA, Khadija, F-77600 Bussy St Georges (FR); JUGOVIC, Svetislav, F-91260 Juvisy-sur Orge (FR)
(86) Numéro de dépôt international: PCT/FR2014/052126
(87) Numéro de publication internationale: WO 2015/040299

(56) Documents cités:
- WO-A1-2013/065577
- JP-A- 2010 200 418

## Description

### DOMAINE TECHNIQUE DE L'INVENTION.

La présente invention concerne un dispositif de détermination de la position angulaire et/ou de la vitesse de rotation d'un rotor d'un moteur électrique polyphasé de véhicule automobile. L'invention concerne également un moteur électrique muni d'un tel dispositif, notamment pour des applications comme moteur électrique de traction dans des véhicules automobiles électriques et hybrides.

### ARRIERE PLAN TECHNOLOGIQUE DE L'INVENTION.

De par leurs performances accrues en termes de rendement et de puissance massique et volumique, les machines synchrones à aimants permanents trouvent aujourd'hui une large application dans le domaine des véhicules automobiles.

Ces machines électriques sont réalisables dans une large gamme de puissance et de vitesse et trouvent des applications aussi bien dans les véhicules de type « tout électrique » que dans les véhicules à bas CO₂ de types dits « mild-hybrid » et « full-hybrid » (en terminologie anglaise).

Les applications « mild-hybrid » concernent généralement des machines électriques de l'ordre de 8 à 10 KW, par exemple, un moteur électrique monté en face avant d'un moteur thermique et couplé à celui-ci par une courroie de transmission. Il est possible avec un tel moteur électrique de réduire la cylindrée de la motorisation thermique (« engine downsizing » en terminologie anglaise) en prévoyant une assistance électrique en couple qui fournit un appoint de puissance, notamment lors des reprises. De plus, une traction à faible vitesse, par exemple en environnement urbain, peut également être assurée par ce même moteur électrique.

Les applications de type « full-hybrid» concernent généralement des moteurs de 25 à 50 KW pour des architectures de type série et/ou parallèle avec une intégration plus aboutie du ou des moteurs électriques dans la chaîne de traction du véhicule, notamment au niveau de l'embrayage.

Les remarquables performances des machines à aimants permanents actuelles sont pour une grande part dues à des rotors présentant une structure dite "à concentration de flux" qui permettent d'obtenir des flux magnétiques importants avec des aimants obtenus à partir de ferrites frittées ou liées.

Dans ces machines, le stator entoure le rotor, et sa masse magnétique possède une série d'encoches, généralement parallèles à l'axe de rotation, délimitant des dents autour desquelles sont formés des enroulements créant les champs magnétiques tournants entraînant le rotor.

Le pilotage d'un onduleur alimentant les enroulements statoriques à partir des sources d'alimentation en courant continu de bord requière la connaissance de la position angulaire du rotor par rapport au stator, ainsi que de la vitesse de rotation et d'autres paramètres.

A cet effet, certaines machines électriques utilisées dans l'industrie de l'automobile sont équipées d'un dispositif connu sous le nom de "résolveur" agencé en bout de l'arbre du rotor.

Un tel résolveur comporte lui-même un rotor et un stator qui sont respectivement fixes par rapport au rotor et au stator de la machine.

Toutefois ce type d'équipement présente des inconvénients, notamment son coût, et la société VALEO EQUIPEMENTS ELECTRIQUES MOTEUR a proposé dans la demande de brevet FR2872644 un autre dispositif de détermination de la position angulaire du rotor.

Le dispositif décrit n'implique aucun équipement coûteux puisque le champ magnétique est directement fourni soit par le rotor de la machine lui-même, soit par une cible magnétique fixée sur l'arbre.

Des moyens de traitement de premiers signaux délivrés par des capteurs à effet Hall fournissent des seconds signaux représentatifs de la position angulaire du rotor, de la vitesse de rotation et d'autres informations utiles au fonctionnement de l'onduleur.

Mais, en mettant en œuvre ce dispositif, l'entité inventive a constaté qu'il était relativement difficile de traiter les premiers signaux pour obtenir une précision satisfaisante sur la position angulaire du rotor dans tous les cas, et éliminer complètement les influences parasites.

Le document JP 2010 200418 décrit une machine électrique comportant un stator, un rotor entourant le stator, une pluralité d'aimants disposés sur la surface interne du rotor et un capteur de détection d'une position de rotation du rotor.

### DESCRIPTION GENERALE DE L'INVENTION.

Le but de la présente invention est donc d'optimiser la détection du champ magnétique d'un rotor pour améliorer la détermination de la position angulaire de ce rotor par rapport au stator.

Selon un premier aspect, l'invention concerne un moteur électrique polyphasé de véhicule automobile comprenant un rotor et un stator entourant le rotor et comprenant une pluralité d'enroulements statoriques autour de dents statoriques délimitées par des encoches dans une masse magnétique statorique.

Conformément à l'invention, le moteur comprend un dispositif de détermination d'une position angulaire et/ou de la vitesse de rotation du rotor du type de ceux comprenant une pluralité de capteurs de champ magnétique fixes par rapport au stator, les capteurs étant agencés dans des encoches délimitant des dents statoriques successives et ayant des grandes faces de boîtier s'étendant dans des plans tangentiels de la masse magnétique statorique de sorte que les capteurs détectent uniquement une composante radiale du champ magnétique à l'intérieur de la masse magnétique statorique.

Selon une caractéristique particulière, le dispositif de détermination comprend en outre un porte-capteurs agencé sur une partie circonférentielle du stator et présentant une section radiale sensiblement en forme de L, une première aile du porte-capteurs s'étendant dans un plan transversal extérieurement au stator et une seconde aile s'étendant intérieurement au stator le long de génératrices du stator.

Selon une autre caractéristique particulière, la seconde aile du dispositif de détermination comprend une pluralité de languettes enserrant les capteurs et aptes à être insérées dans les encoches.

Selon encore une autre caractéristique particulière, la première aile comporte au moins deux plots de centrage coopérant avec des orifices de centrage de la partie circonférentielle et au moins deux trous oblongs recevant des vis de fixation sur la partie circonférentielle.

Selon une forme de réalisation particulière, les capteurs sont au nombre de trois et les capteurs sont par exemple des capteurs à effet Hall.

Selon l'invention, le rotor comprend des aimants permanents dans une configuration en concentration de flux.

Selon l'invention, les enroulements statoriques présentent des extrémités connectées par un anneau d'interconnexion et le dispositif de détermination est fixé sur l'anneau d'interconnexion et/ou sur la masse magnétique statorique.

Selon l'invention, le dispositif de détermination comporte des lumières laissant un passage auxdites extrémités.

Selon encore une autre forme de réalisation particulière, le rotor est à pôles ouverts.

Selon encore une autre forme de réalisation particulière, les aimants permanents sont constitués de ferrite.

Ces quelques spécifications essentielles auront rendu évidents pour l'homme de métier les avantages apportés par le moteur électrique selon l'invention équipé du dispositif de détermination d'une position angulaire et/ou de la vitesse de rotation d'un rotor tel que décrit ci-dessus, par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** est une vue en perspective d'un moteur électrique polyphasé selon l'invention muni d'un dispositif de détermination d'une position angulaire et/ou de la vitesse de rotation d'un rotor.
La **Figure 2** est une vue éclatée du stator et du dispositif de détermination d'une position angulaire et/ou de la vitesse de rotation d'un rotor selon l'invention.
La **Figure 3** est une vue éclatée détaillée du dispositif de détermination d'une position angulaire et/ou de la vitesse de rotation d'un rotor selon l'invention.
Les **Figures 4a** **et** **4b** sont respectivement des vues en coupe partielles, transversale et radiale, d'une partie circonférentielle du stator du moteur sur laquelle est agencé le dispositif de détermination d'une position angulaire et/ou de la vitesse de rotation d'un rotor selon l'invention.

### DESCRIPTION DES MODES DE REALISATION PREFERES DE L'INVENTION.

Dans un mode de réalisation préféré de l'invention, le moteur électrique dont il s'agit est étudié pour être couplé à l'embrayage d'un véhicule hybride.

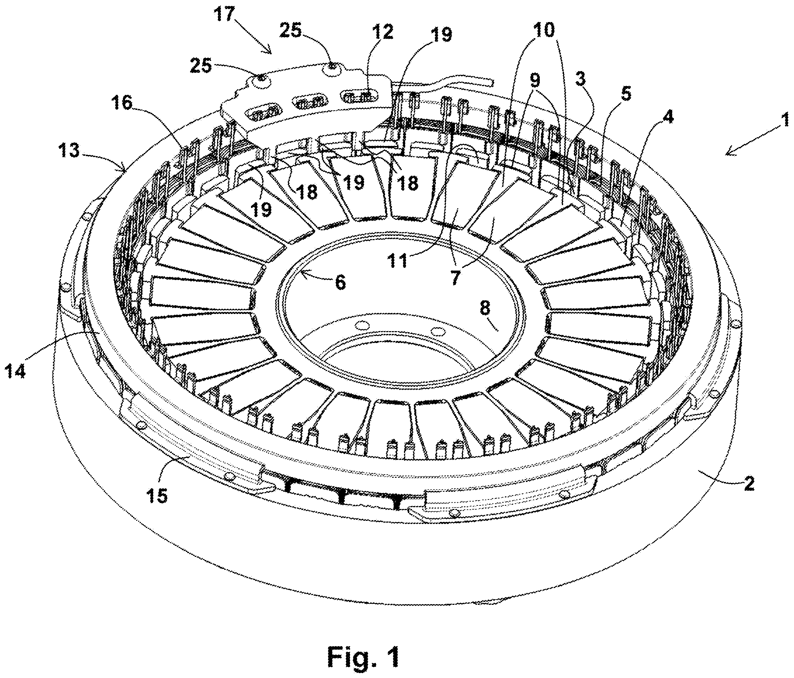

Comme le montre bien la **Figure 1****,** ce moteur est de la forme générale d'un cylindre aplati, d'une hauteur relativement faible par rapport à son diamètre extérieur adapté à celui de l'embrayage.

Ce diamètre extérieur correspond à celui de la masse magnétique statorique 2 du moteur 1, dans laquelle des encoches radiales 3 délimitent des dents statoriques 4 sur lesquelles sont agencés des enroulements statoriques 5.

Dans ce mode de réalisation, le rotor 6 est un rotor à aimants permanents 7 dans une configuration en concentration de flux.

Ces aimants permanents 7 sont répartis régulièrement entre une partie périphérique et une partie centrale d'une masse magnétique rotorique 8 de manière à former une pluralité de pôles Nord et pôles Sud alternés 9.

Le rotor 6 représenté est dit à "pôles ouverts", c'est-à-dire que deux sections polaires consécutives 10 sont séparées par une ouverture 11 dans la partie périphérique de la masse magnétique rotorique 8.

Alternativement, le rotor 6 est de type dit à "pôles fermés".

De manière connue, dans le but de maximiser le volume des aimants permanents 7, notamment quand ceux-ci sont constitués de ferrite, ces aimants sont, du côté de la partie centrale du rotor 6, en forme en coin.

Les masses magnétiques statorique 2 et rotorique 8 sont réalisées de manière classique avec des paquets de tôles métalliques.

Les enroulements statoriques 5 sont parcourus par des courants statoriques et créent des champs magnétiques tournants entraînant le rotor 6.

Pour ce faire, les extrémités 12 des enroulements statoriques 5 sont connectées électriquement de la manière appropriée par un anneau d'interconnexion 13.

Cet anneau d'interconnexion 13 comprend un carter 14, fixé par des brides 15 sur la masse magnétique statorique 2, qui abrite des traces conductrices réalisant un schéma d'interconnexion spécifié, et présente extérieurement des pattes de connexion 16 sur lesquelles sont soudées les extrémités 12 des enroulements statoriques 5.

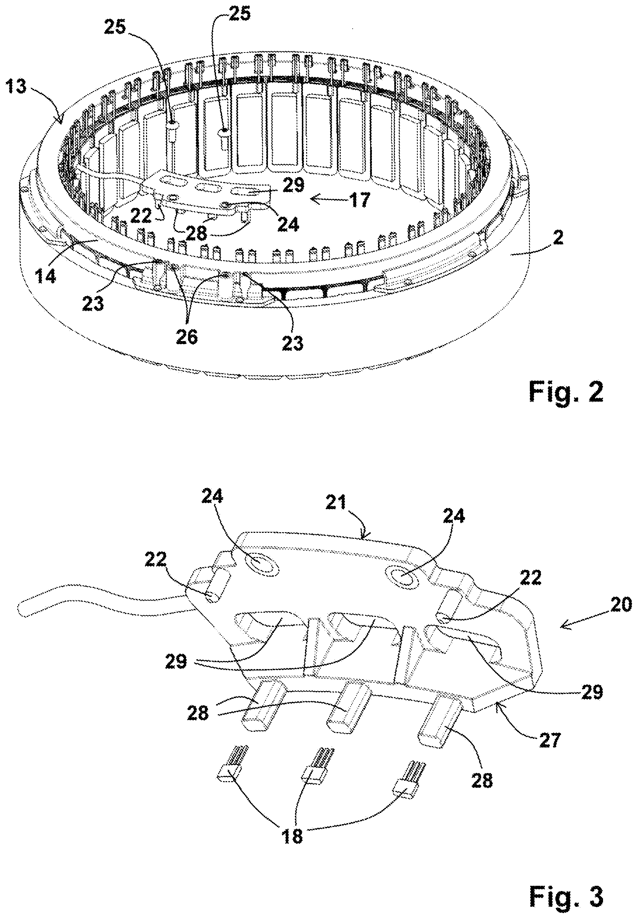

Le contrôle des courants statoriques est basé sur les informations fournies par le dispositif de détermination d'une position angulaire et/ou de la vitesse de rotation d'un rotor 17 selon l'invention, qui est agencé sur une partie circonférentielle du stator 2, 5, 13, comme le montrent bien les **Figures 1** **et** **2****.**

De manière connue en soi, ce dispositif de détermination d'une position angulaire et/ou de la vitesse de rotation d'un rotor 17 comprend des capteurs de champ magnétique 18, fixes par rapport au stator 2, 5, 13, qui délivrent des premiers signaux à partir desquels des moyens de traitement externes (non représentés - situés par exemple dans l'onduleur) fournissent des seconds signaux représentatifs de la position angulaire du rotor 6 par rapport au stator 2, 5, 13.

Dans le mode de réalisation préféré de l'invention représenté, le dispositif 17 permet d'agencer très précisément trois capteurs à effet Hall 18 à l'intérieur de la masse magnétique statorique 2 de manière à ce que les premiers signaux soient représentatifs uniquement du champ magnétique de fuite du rotor 6.

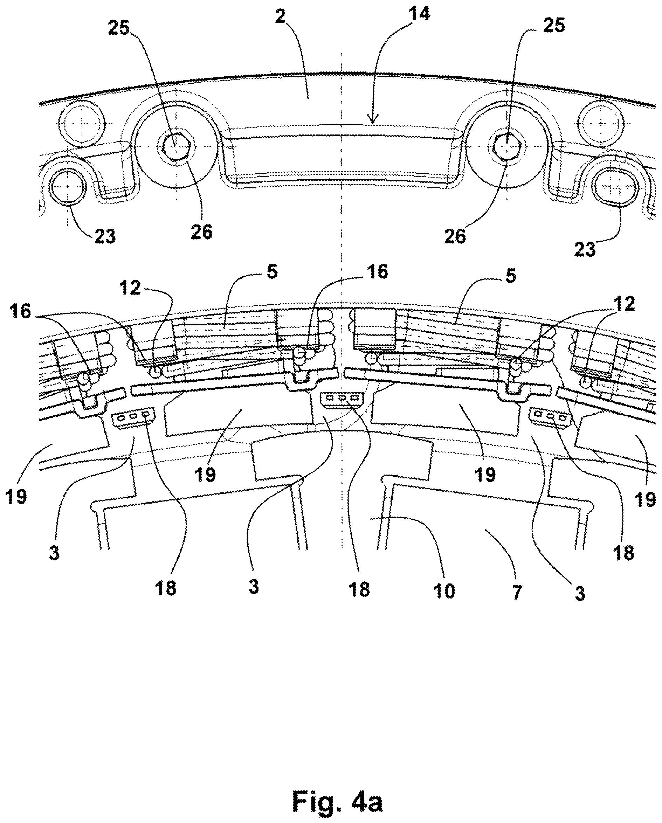

Comme le montrent bien la **Figure 1****,** et mieux la **Figure 4a****,** les trois capteurs 18 sont agencés dans des encoches 3 délimitant des dents statoriques successives 19.

Cet emplacement particulier des capteurs 18 permet de simplifier le traitement ultérieur, notamment par logiciel après acquisition, des premiers signaux qu'ils délivrent.

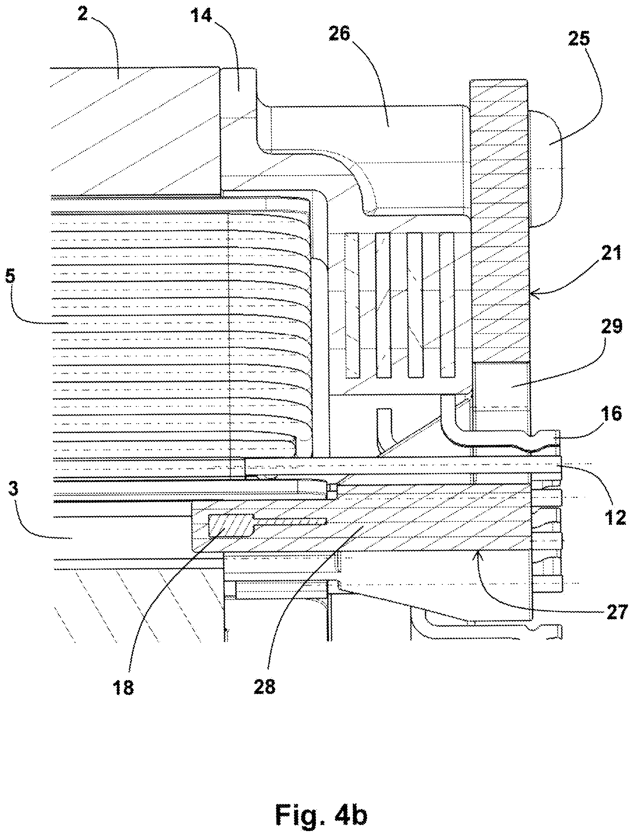

Le positionnement précis des capteurs 18 entre les dents statoriques successives 19, quand le dispositif 17 est placé sur le stator 2, 5, 13, est obtenu au moyen d'un porte-capteurs 20 qui présente une section radiale sensiblement en forme de L, comme le montrent bien la **Figure 3****,** et mieux la **Figure 4b****.**

Une première aile 21 du porte-capteurs 20, qui s'étend après montage dans un plan transversal du moteur 1, comporte deux plots de centrage 22 qui coopèrent avec des orifices de centrage 23 du carter 14 de l'anneau d'interconnexion 13.

Cette première aile 21 comporte également deux trous oblongs 24 qui reçoivent des vis 25 de fixation du porte-capteurs 20 dans des alésages taraudés 26 du carter 14, tout en respectant l'indexation fournie par les plots de centrage 22.

Une seconde aile 27 du porte-capteurs 20, qui s'étend après montage à l'intérieur de la masse statorique 2 le long de génératrices, comprend trois languettes 28 qui s'étendent dans les encoches 3 et qui comprennent chacune l'un des trois capteurs 18.

Un capteur à effet Hall 18 est un composant électronique qui se présente le plus souvent sous la forme d'un petit boîtier parallélépipédique aplati comportant trois fils de connexion sur l'une des petites faces, dans les versions dites "traversantes" par opposition aux versions CMS (composant monté en surface).

Deux de ces fils de connexion sont nécessaires à l'alimentation électrique du composant, et, sur le troisième, est disponible une tension proportionnelle à la composante du champ magnétique perpendiculaire aux grandes faces du boîtier.

Comme le montrent bien les **Figures 4a** **et** **4b****,** les grandes faces des boîtiers des capteurs à effet Hall 18 s'étendent dans des plans tangentiels de la masse statorique 2; de la sorte les capteurs détectent uniquement une composante radiale du champ magnétique à l'intérieur de la masse statorique 2.

Dans le but d'obtenir un dispositif 17 compact, c'est-à-dire qui n'augmente pas la hauteur du stator 2, 5, 13, le dispositif 17 comporte des lumières 29 qui permettent aux pattes de connexion 16 et aux extrémités 12 des enroulements statoriques 5 de traverser la première aile 21 du porte-capteurs 20.

Une réalisation concrète d'un moteur électrique polyphasé 1 comprenant un tel dispositif de détermination d'une position angulaire et/ou de la vitesse de rotation d'un rotor 17 est par exemple un moteur de 25 à 50 KW pour des applications dans des véhicules automobiles du type dits «mild-hybrid».

Ce moteur 1 bénéficie alors d'un avantage concurrentiel certain, car le dispositif de détermination d'une position angulaire et/ou de la vitesse de rotation d'un rotor 17 qu'il comprend est peu onéreux à fabriquer en série, facile à installer sans procédure d'alignement complexe et assure un maintien efficace des capteurs 18.

Comme il va de soi, l'invention ne se limite pas aux seuls modes de réalisation préférentiels décrits ci-dessus.

Notamment, les aimants permanents 7 sont alternativement avantageusement constitués de plusieurs barreaux de section rectangulaire juxtaposés.

Des capteurs de champ magnétique de type magnéto-résistif remplacent alternativement les capteurs à effet Hall 18.

D'autres modes de réalisation basés sur un nombre de capteurs 18, un nombre de pôles 9 ou un facteur de forme du moteur 1 différents de ceux spécifiés ou représentés, ne sortiraient pas du cadre de la présente invention dans la mesure où ils résultent des revendications ci-après.

## Revendications

1. Moteur électrique polyphasé (1) de véhicule automobile comprenant un rotor (6) et un stator (2, 5, 13) comprenant une pluralité d'enroulements statoriques (5) autour de dents statoriques (4, 19) délimitées par des encoches (3) dans une masse magnétique statorique (2),
- ledit moteur comprenant un dispositif de détermination d'une position angulaire (17) et/ou de la vitesse de rotation dudit rotor (6) du type de ceux comprenant une pluralité de capteurs de champ magnétique (18) fixes par rapport audit stator (2, 5, 13), lesdits capteurs (18) étant agencés dans desdites encoches (3) délimitant des dents statoriques successives (19) et ayant des grandes faces de boîtier s'étendant dans des plans tangentiels de ladite masse magnétique statorique (2) de sorte que lesdits capteurs (18) détectent uniquement une composante radiale du champ magnétique à l'intérieur de la masse magnétique statorique (2), **caractérisé en ce que**:
- ledit stator entoure ledit rotor (6),
- ledit rotor (6) comprend des aimants permanents (7) dans une configuration en concentration de flux,
- lesdits enroulements statoriques (5) présentent des extrémités (12) connectées par un anneau d'interconnexion (13) et **en ce que** ledit dispositif de détermination d'une position angulaire (17) et/ou de la vitesse de rotation du rotor est fixé sur ledit anneau d'interconnexion (13) et/ou sur ladite masse magnétique statorique (2), et
- ledit dispositif de détermination d'une position angulaire (17) et/ou de la vitesse de rotation du rotor comporte des lumières (29) laissant un passage auxdites extrémités (12).

2. Moteur électrique polyphasé selon la revendication 1, **caractérisé en ce que** ledit dispositif de détermination d'une position angulaire (17) et/ou de la vitesse de rotation du rotor comprend en outre un porte-capteurs (20) agencé sur une partie circonférentielle dudit stator (2, 5, 13) et présentant une section radiale sensiblement en forme de L, une première aile (21) dudit porte-capteurs (20) s'étendant dans un plan transversal extérieurement audit stator (2, 5, 13) et une seconde aile (27) s'étendant intérieurement audit stator (2, 5, 13) le long de génératrices dudit stator (2,5, 13).

3. Moteur électrique polyphasé selon la revendication 2, **caractérisé en ce que** ladite seconde aile (27) du dispositif de détermination d'une position angulaire (17) et/ou de la vitesse de rotation du rotor comprend une pluralité de languettes (28) enserrant lesdits capteurs (18) et insérées dans lesdites encoches (3).

4. Moteur électrique polyphasé selon la revendication 2, **caractérisé en ce que** ladite première aile (21) comporte au moins deux plots de centrage (22) coopérant avec des orifices de centrage (23) de ladite partie circonférentielle et au moins deux trous oblongs (24) recevant des vis (25) de fixation sur ladite partie circonférentielle.

5. Moteur électrique polyphasé selon l'une quelconque des revendications 1 à 4 précédentes, **caractérisé en ce que** lesdits capteurs (18) sont au nombre de trois.

6. Moteur électrique polyphasé selon l'une quelconque des revendications 1 à 4 précédentes, **caractérisé en ce que** lesdits capteurs (18) sont des capteurs à effet Hall.

7. Moteur électrique polyphasé selon l'une quelconque des revendications 1 à 6 précédentes, **caractérisé en ce que** ledit rotor (6) est à pôles ouverts.

8. Moteur électrique polyphasé selon l'une quelconque des revendications 1 à 7 précédentes, **caractérisé en ce que** lesdits aimants permanents (7) sont constitués de ferrite.

## Patentansprüche

1. Mehrphasiger Elektromotor (1) eines Kraftfahrzeugs, beinhaltend einen Rotor (6) und einen Stator (2, 5, 13), der eine Vielzahl von Statorwicklungen (5) um Statorzähne (4, 19) herum beinhaltet, welche durch Nuten (3) in einer Magnetmasse des Stators (2) begrenzt sind,
- wobei der Motor eine Vorrichtung zur Bestimmung einer Winkelposition (17) und/oder der Drehzahl des Rotors (6) von demjenigen Typ beinhaltet, der eine Vielzahl von Magnetfeldsensoren (18) beinhaltet, die mit Bezug auf den Stator (2, 5, 13) fest sind, wobei die Sensoren (18) in den Nuten (3), die aufeinanderfolgende Statorzähne (19) begrenzen, angeordnet sind und große Gehäuseflächen aufweisen, die sich in Tangentialebenen der Magnetmasse des Stators (2) erstrecken, sodass die Sensoren (18) nur eine radiale Komponente des Magnetfelds im Inneren der Magnetmasse des Stators (2) detektieren, **dadurch gekennzeichnet, dass**:
- der Stator den Rotor (6) umgibt,
- der Rotor (6) Permanentmagneten (7) in einer Flusskonzentrationskonfiguration beinhaltet,
- die Statorwicklungen (5) Enden (12) aufweisen, die durch einen Verbindungsring (13) verbunden sind, und dass die Vorrichtung zur Bestimmung einer Winkelposition (17) und/oder der Drehzahl des Rotors an dem Verbindungsring (13) und/oder an der Magnetmasse des Stators (2) befestigt ist, und
- die Vorrichtung zur Bestimmung einer Winkelposition (17) und/oder der Drehzahl des Rotors Kanäle (29) umfasst, die für die Enden (12) einen Durchgang bereitstellen.

2. Mehrphasiger Elektromotor nach Anspruch 1, **dadurch gekennzeichnet, dass** die Vorrichtung zur Bestimmung einer Winkelposition (17) und/oder der Drehzahl des Rotors ferner einen Sensorträger (20) beinhaltet, der an einem Umfangsabschnitt des Stators (2, 5, 13) angebracht ist und einen im Wesentlichen L-förmigen radialen Querschnitt aufweist, wobei sich ein erster Flügel (21) des Sensorträgers (20) in einer Querebene außerhalb des Stators (2, 5, 13) erstreckt und sich ein zweiter Flügel (27) innerhalb des Stators (2, 5, 13) entlang von Mantellinien des Stators (2, 5, 13) erstreckt.

3. Mehrphasiger Elektromotor nach Anspruch 2, **dadurch gekennzeichnet, dass** der zweite Flügel (27) der Vorrichtung zur Bestimmung einer Winkelposition (17) und/oder der Drehzahl des Rotors eine Vielzahl von Zungen (28) beinhaltet, die die Sensoren (18) umschließen und in die Nuten (3) eingefügt sind.

4. Mehrphasiger Elektromotor nach Anspruch 2, **dadurch gekennzeichnet, dass** der erste Flügel (21) mindestens zwei Zentrierstifte (22), die mit Zentrieröffnungen (23) des Umfangsabschnitts zusammenwirken, und mindestens zwei Langlöcher (24), die Schrauben (25) zur Befestigung an dem Umfangsabschnitt aufnehmen, umfasst.

5. Mehrphasiger Elektromotor nach einem der vorhergehenden Ansprüche 1 bis 4, **dadurch gekennzeichnet, dass** die Anzahl der Sensoren (18) drei beträgt.

6. Mehrphasiger Elektromotor nach einem der vorhergehenden Ansprüche 1 bis 4, **dadurch gekennzeichnet, dass** die Sensoren (18) Hall-Sensoren sind.

7. Mehrphasiger Elektromotor nach einem der vorhergehenden Ansprüche 1 bis 6, **dadurch gekennzeichnet, dass** der Rotor (6) über offene Pole verfügt.

8. Mehrphasiger Elektromotor nach einem der vorhergehenden Ansprüche 1 bis 7, **dadurch gekennzeichnet, dass** die Permanentmagneten (7) aus Ferrit bestehen.

## Claims

1. Polyphase electric motor (1) for a motor vehicle, comprising a rotor (6) and a stator (2, 5, 13) comprising a plurality of stator windings (5) around stator teeth (4, 19) that are delimited by notches (3) in a stator magnetic mass (2),
- said motor comprising a device for determining an angular position (17) and/or the rotational speed of said rotor (6) of the type of those comprising a plurality of magnetic field sensors (18) are fixed with respect to said stator (2, 5, 13), said sensors (18) being arranged in some of said notches (3) delimiting successive stator teeth (19) and having large housing faces extending in planes tangential to said stator magnetic mass (2) such that said sensors (18) detect only a radial component of the magnetic field inside the stator magnetic mass (2), **characterized in that**:
- said stator surrounds said rotor (6),
- said rotor (6) comprises permanent magnets (7) in a flux concentration configuration,
- said stator windings (5) have ends (12) that are connected by an interconnection ring (13) and **in that** said device for determining an angular position (17) and/or the rotational speed of the rotor is secured to said interconnection ring (13) and/or to said stator magnetic mass (2), and
- said device for determining an angular position (17) and/or the rotational speed of the rotor comprises openings (29) that free up a passage for said ends (12).

2. Polyphase electric motor according to Claim 1, **characterized in that** said device for determining an angular position (17) and/or the rotational speed of the rotor further comprises a sensor carrier (20) that is arranged on a circumferential portion of said stator (2, 5, 13) and has an essentially L-shaped radial section, a first arm (21) of said sensor carrier (20) extending in a transverse plane outside of said stator (2, 5, 13) and a second arm (27) extending inside of said stator (2, 5, 13) along generatrices of said stator (2, 5, 13).

3. Polyphase electric motor according to Claim 2, **characterized in that** said second arm (27) of the device for determining an angular position (17) and/or the rotational speed of the rotor comprises a plurality of tongues (28) that grip said sensors (18) and are inserted into said notches (3).

4. Polyphase electric motor according to Claim 2, **characterized in that** said first arm (21) comprises at least two centring lugs (22) that cooperate with centring orifices (23) of said circumferential part, and at least two oblong holes (24) receiving screws (25) for securing on said circumferential part.

5. Polyphase electric motor according to any one of the preceding Claims 1 to 4, **characterized in that** there are three of said sensors (18).

6. Polyphase electric motor according to any one of the preceding Claims 1 to 4, **characterized in that** said sensors (18) are Hall effect sensors.

7. Polyphase electric motor according to any one of the preceding Claims 1 to 6, **characterized in that** said rotor (6) is an open-pole rotor.

8. Polyphase electric motor according to any one of the preceding Claims 1 to 7, **characterized in that** said permanent magnets (7) are made of ferrite.
